# FASCICULE DE BREVET EUROPEEN

(11) **EP 1 851 180 B1**
(45) Date de publication et mention de la délivrance du brevet: **18.04.2018**
(21) Numéro de dépôt: 06726195.8
(22) Date de dépôt: 22.02.2006
(51) Int. Cl.: C04B 35/565, C04B 35/571, C04B 35/628, C04B 35/80

(54) **PIECE EN MATERIAU COMPOSITE A MATRICE CERAMIQUE**
VERBUNDWERKSTOFFKÖRPER MIT KERAMIKMATRIX
COMPOSITE MATERIAL BODY WITH CERAMIC MATRIX

(30) Priorité: 23.02.2005 FR 0501826
(43) Date de publication de la demande: 07.11.2007
(73) Titulaire: Safran Ceramics, 33185 Le Haillan (FR)
(72) Inventeur: PHILIPPE, Eric, F-33700 Merignac (FR); BERTRAND, Sébastien, F-33480 Moulis-en-medoc (FR); BOUILLON, Eric, F-33185 Le Haillan (FR); CAILLAUD, Alain, F-33880 Saint Caprais De Bordeaux (FR); ICHARD, Jean-christophe, F-31200 Toulouse (FR); BAGAT, Robert, F-33340 Valeyrac (FR)
(74) Mandataire: Delumeau, François Guy
(86) Numéro de dépôt international: PCT/FR2006/050157
(87) Numéro de publication internationale: WO 2006/090087

(56) Documents cités:
- EP-A- 0 549 224
- EP-A- 1 277 716
- JP-A- H07 197 264
- JP-A- H10 182 256
- US-A- 5 738 951
- US-A1- 2003 162 647
- ORTONA A ET AL: "SiC-SiCf CMC manufacturing by hybrid CVI-PIP techniques: process optimisation" FUSION ENGINEERING AND DESIGN, ELSEVIER SCIENCE PUBLISHERS, AMSTERDAM, NL, vol. 51-52, novembre 2000 (2000-11), pages 159-163, XP004315159 ISSN: 0920-3796
- NASLAIN R ET AL: "Boron-bearing species in ceramic matrix composites for long-term aerospace applications" JOURNAL OF SOLID STATE CHEMISTRY ACADEMIC PRESS USA, vol. 177, no. 2, février 2004 (2004-02), pages 449-456, XP002353467 ISSN: 0022-4596

## Description

### Arrière plan de l'invention

L'invention concerne la fabrication de pièces en matériau composite à matrice céramique (matériau CMC).

Les matériaux CMC sont généralement utilisés pour des pièces devant présenter un bon comportement mécanique jusqu'à des températures élevées, typiquement 1200 °C et même au-delà, dans un environnement oxydant.

Des applications des matériaux CMC se trouvent dans les domaines aéronautique et spatial, par exemple pour des pièces structurelles exposées à un flux de gaz chaud dans des moteurs aéronautiques.

Les matériaux CMC sont formés d'un substrat de renfort fibreux densifié par une matrice céramique. Le substrat peut être en fibres de carbone ou en fibres céramiques, telles que des fibres en carbure (typiquement carbure de silicium SiC), nitrure ou oxyde réfractaire.

Un procédé de réalisation de matériau CMC est décrit dans le document US 4 752 503. Selon ce procédé connu, un revêtement d'interphase est formé sur les fibres afin d'optimiser la liaison entre fibres et matrice, c'est-à-dire avoir une liaison suffisante pour assurer un transfert au renfort fibreux des sollicitations mécaniques auxquelles le matériau est soumis, mais une liaison pas trop forte pour ne pas rendre le matériau fragile, une forte liaison favorisant la propagation de fissures de la matrice céramique à travers les fibres, donc une dégradation du renfort fibreux. L'interphase est typiquement en carbone pyrolytique (PyC) ou nitrure de bore (BN). L'interphase peut aussi être formée par une succession de couches élémentaires PyC (ou BN) et SiC favorisant la déviation de fissures, comme décrit dans un article de R. Naslain et al. paru dans Journal of Solid State Chemistry, Academic Press USA, Vol. 117, N° 2 (2004-2), p. 449-456.

Un processus couramment utilisé pour la densification du substrat de renfort fibreux d'un matériau CMC est l'infiltration chimique en phase gazeuse, ou phase vapeur (CVI). Une phase gazeuse réactionnelle est introduite dans un four où règnent des conditions de pression et température aptes à favoriser la diffusion de la phase gazeuse au sein de la porosité du renfort fibreux et la formation de la matrice par dépôt sur les fibres du renfort d'un matériau produit par la décomposition d'un constituant de la phase gazeuse réactionnelle ou par la réaction entre plusieurs constituants de celle-ci.

Un autre processus connu pour la densification d'un substrat poreux par une matrice céramique est la densification par voie liquide. Le substrat est imprégné par une composition à l'état liquide contenant un précurseur du matériau céramique de la matrice, par exemple un précurseur sous forme d'une résine. La transformation du précurseur est réalisée par traitement thermique produisant le matériau céramique de la matrice. Un tel processus par voie liquide mis en oeuvre sur une texture fibreuse dont les fibres sont revêtues d'une interphase en nitrure de bore est décrit dans le document EP 0 549 224.

Le substrat de renfort fibreux est réalisé sous forme d'une préforme dont la forme correspond à celle d'une pièce à réaliser. La préforme fibreuse est obtenue à partir de texture(s) fibreuse(s) telle(s) que, notamment, des textures unidirectionnelles, fils, câbles, tissus, ou des textures bidimensionnelles, nappes unidirectionnelles ou multidirectionnelles, ou des feutres, par des procédés tels que bobinage, tissage bi- ou tri-dimensionnel, tressage, drapage (superposition de strates de textures bidimensionnelles sur une forme), superposition de strates de texture bidimensionnelle et liaison entre elles par aiguilletage, couture, ou autre.

Afin de conserver la forme souhaitée à la préforme fibreuse lors de la densification, notamment lorsque la pièce à fabriquer est de forme complexe, il est nécessaire d'avoir recours à un outillage de maintien. Un tel outillage représente un encombrement et une inertie thermique importants dans un four de CVI. Aussi, la densification d'une préforme par une matrice céramique obtenue par CVI est-elle réalisée en deux étapes. Une première étape de consolidation est réalisée pour déposer une phase consolidante de matrice céramique afin de lier entre elles les fibres de la préforme de façon suffisante pour que la préforme conserve sa forme sans l'aide d'outillage. Après consolidation, la préforme est retirée de l'outillage et la densification est poursuivie dans une deuxième étape.

Toutefois, le processus CVI est lent et la consolidation des préformes par un tel processus représente une durée assez longue, avec la présence d'outillages de maintien dans le four qui engendre les inconvénients précités (encombrement et inertie thermique). De plus après consolidation, les préformes doivent être refroidies, extraites du four pour retirer les outillages de maintien, puis réintroduites dans le four et portées à nouveau à la température souhaitée pour la poursuite de la densification, ce qui implique de nombreuses manipulations.

Il a été proposé dans un article de A. Ortona et al. paru dans Fusion Engineering and Design, Elsevier Science Publishers, Amsterdam, Pays-Bas, Vol. 51-52 (2000), p. 159-163, de réaliser une pièce en matériau composite de type SiC-SiC (renfort fibreux et matrice en SiC) par un procédé comportant :
- la formation par un processus CVI d'une interphase carbone sur les fibres SiC d'une préforme fibreuse maintenue dans un outillage,
- puis la formation par un processus CVI d'une première phase de matrice consolidante en SiC au sein de la préforme fibreuse toujours maintenue dans un outillage,
- et la formation par un processus voie liquide (infiltration par polymère et pyrolyse) d'une phase de matrice SiC complétant la densification de la préforme.

Le document US 2003/0162647 divulgue quant à lui un procédé comprenant la formation d'une préforme fibreuse en fibres SiC qui est mise en forme par imprégnation par une résine phénolique et traitement thermique. Après formation d'une interphase en carbone par CVI, il est procédé à la formation d'une première phase de matrice SiC par CVI, à la formation d'une deuxième phase de matrice SiC par voie liquide et à un dépôt final de SiC par CVI qui obture les fissures de la deuxième phase de matrice et forme un revêtement SiC.

Un procédé similaire avec formation d'une interphase carbone par CVI, d'une première phase de matrice SiC par CVI, d'une deuxième phase de matrice SiC par voie liquide et d'un dépôt de SiC par CVI pour étanchéification du matériau composite est décrit dans EP 1 277 716. US5738951 A décrit une méthode de préparation de fibres revêtues d'une interphase d'épaisseur de 95 nm contenant des couches de carbone pyrolytique et de carbure de silicium. La couche de carbone pyrolytique peut être remplacée par une couche de nitrure de bore ou carbure de bore. Les fibres peuvent être des fibres seules ou des fibres ayant une structure bi ou tri-dimensionnelle.

On retrouve dans les documents précités le recours à un processus CVI pour former une première phase de matrice SiC, après formation d'un revêtement d'interphase sur les fibres, avec les inconvénients mentionnés plus haut des processus CVI.

### Objet et résumé de l'invention

L'invention a pour but de remédier à ces inconvénients et propose à cet effet une pièce selon la revendication 1.

L'invention est remarquable par la combinaison d'une réalisation de la consolidation de la préforme fibreuse par voie liquide et de la formation d'une interphase avec une couche interne assurant une liaison non trop forte avec les fibres et une couche externe assurant une bonne liaison avec la matrice. La consolidation par voie liquide fait appel à des techniques classiques d'imprégnation par une composition liquide qui sont aisées et rapides à mettre en oeuvre.

Bien que la technique de consolidation de préforme fibreuse par voie liquide soit connue en elle-même, dans le cas de la formation d'une phase consolidante en carbone, la déposante a observé que cette technique ne peut être mise en oeuvre de la même façon avec une composition liquide précurseur de céramique. En effet, dans le cas d'une préforme en fibres de carbone (ou revêtues de carbone), il n'y a pas adhérence du précurseur de céramique sur les fibres ce qui conduit à une absence de liaison fibres-matrice et affecte la tenue mécanique aux efforts. Au contraire, dans le cas d'une préforme en fibres céramiques, l'adhérence est très forte et conduit à une trop forte liaison fibres-matrice qui rend le matériau fragile. La formation d'une interphase spécifique permet de résoudre cette difficulté. La couche interne du revêtement d'interphase est en carbone dopé au bore, ou BC. L'utilisation de BC est préférée car il est moins sensible à l'oxydation que PyC et plus aisé à mettre en oeuvre que BN.

La couche externe du revêtement d'interphase est de préférence en un matériau céramique semblable à celui de la phase consolidante de matrice.

Les fibres du renfort fibreux peuvent être en un matériau choisi parmi le carbone et les céramiques.

### Brève description des figures

L'invention sera mieux comprise à la lecture de la description faite ci-après en référence aux dessins annexés sur lesquels :
- la figure 1 montre l'enchaînement des étapes de réalisation d'une pièce en matériau CMC selon un mode de mise en oeuvre de l'invention ; et
- la figure 2 est une microphotographie d'une fibre SiC munie d'un revêtement d'interphase.

### Description détaillée de modes de réalisation

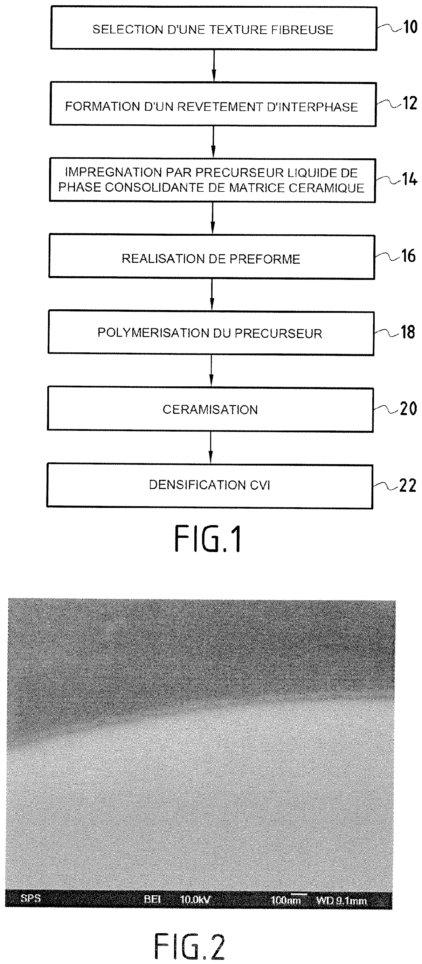

Une première étape 10 du procédé de la figure 1 consiste à sélectionner une texture fibreuse destinée, après mise en forme ultérieure, à constituer le renfort fibreux d'une pièce en matériau CMC à réaliser.

Les fibres de la texture peuvent être en carbone ou en céramique. Le procédé selon l'invention vise plus particulièrement l'utilisation de fibres céramiques, notamment des fibres constituées essentiellement par du carbure de silicium SiC ou autre matériau réfractaire tel qu'un oxyde, par exemple alumine ou silice.

La texture fibreuse utilisée peut être sous forme d'une texture unidirectionnelle (1D) telle que fil, câble, mèche, ou d'une texture bidimensionnelle (2D), telle que tissu, nappe unidirectionnelle ou multidirectionnelle, tricot, tresse, ou d'une texture tridimensionnelle (3D) telle qu'un feutre, un tissu, tricot ou tresse tridimensionnel ou une texture 3D formée par bobinage ou drapage de textures 1D ou 2D. Dans tous les cas, la texture fibreuse est une texture déformable.

Dans une deuxième étape 12, un revêtement d'interphase est formé sur les fibres de la texture fibreuse par un processus d'infiltration chimique en phase vapeur. Le revêtement d'interphase formé comprend :
- une couche interne formée sur la surface des fibres et en un matériau de défragilisation du matériau CMC à réaliser, c'est-à-dire un matériau permettant une liaison pas trop forte entre la matrice du matériau CMC et les fibres pour faire en sorte qu'une fissure se propageant dans la matrice voit sont énergie dissipée dans la couche de défragilisation et ne se propage pas à travers les fibres, et
- une couche externe formée sur la couche interne et en un matériau céramique permettant une bonne adhérence avec la phase externe de matrice céramique du matériau CMC avec laquelle elle est en contact.

Le matériau de la couche interne est BC du fait de sa bonne tenue à l'oxydation et de sa facilité de mise en oeuvre. Les processus CVI de formation de couches de PyC, BN et BC sont bien connus. On pourra se référer par exemple aux documents US 4 752 503 et US 6 068 930.

Le matériau de la couche externe est choisi de manière à être compatible (c'est-à-dire ne pas réagir chimiquement) avec la phase interne de la matrice céramique du matériau CMC et à bien adhérer à celle-ci. On choisira de préférence un matériau de même nature que celui de cette phase interne de matrice céramique. Ainsi, lorsque la phase interne de matrice céramique est en SiC, la couche externe du revêtement d'interphase est également en SiC. Les processus CVI de formation de couches SiC sont bien connus. On pourra se référer aux documents FR 2 401 888 et US 5 738 908.

Le revêtement d'interphase est formé sur la texture fibreuse à l'état libre. La texture fibreuse est placée dans un four d'infiltration CVI sans être maintenue dans un outillage et les couches interne et externe sont réalisées successivement, en modifiant la phase gazeuse introduite dans le four et en adaptant éventuellement les paramètres d'infiltration (tels que température, pression et temps de séjour de la phase gazeuse dans le four).

L'épaisseur totale du revêtement d'interphase doit être limitée pour que la texture fibreuse munie de ce revêtement ne soit pas consolidée et conserve une déformabilité suffisante pour être mise en forme et constituer une préforme d'une pièce en matériau CMC à réaliser.

Cette épaisseur est inférieure à 100 nm. L'épaisseur de la couche externe du revêtement d'interphase pourra être très faible, même limitée à quelques nm ou dizièmes de nm.

En variante, le revêtement d'interphase peut être formé sur les fibres ou éléments fibreux constitutifs de la texture fibreuse avant même la formation de celle-ci. Par exemple, dans le cas d'une texture fibreuse tissée, le revêtement d'interphase peut être formé sur les fils constitutifs de la texture fibreuse, avant tissage. L'épaisseur du revêtement d'interphase doit ici aussi être inférieure à 100 nm.

Après formation du revêtement d'interphase, la texture fibreuse est imprégnée par un précurseur liquide d'une phase interne consolidante de la matrice céramique du matériau CMC à réaliser (étape 14). Dans le cas d'une phase de matrice SiC, le précurseur liquide peut être une résine par exemple choisie parmi les polycarbosilanes, polycarbosilazanes ou polyhydrogénovinylsilanes. Des précurseurs liquides d'autres céramiques sont connus, par exemple des polyborazines précurseurs de BN ou des polysiloxanes précurseurs de Si-O-C.

L'imprégnation peut être réalisée par passage dans un bain de précurseur liquide éventuellement additionné d'un solvant. La quantité de précurseur liquide imprégnant la texture fibreuse est choisie suffisante pour, laisser une phase de matrice consolidante, c'est-à-dire une phase de matrice liant suffisamment entre elles les fibres de la texture fibreuse pour rigidifier celle-ci. Typiquement, la phase de matrice consolidante occupe environ 5% à 8% du volume de la porosité accessible de la texture fibreuse munie du revêtement d'interphase.

Après imprégnation, la texture fibreuse est mise en forme pour obtenir une préforme, ou ébauche, dont la forme correspond à celle de la pièce en matériau CMC à réaliser (étape 16). Cette mise en forme peut être réalisée par bobinage ou drapage sur un mandrin ou une forme et maintien de la préforme dans la forme voulue si nécessaire au moyen d'un outillage.

En variante, l'étape de mise en forme peut être réalisée avec la texture fibreuse munie du revêtement d'interphase mais non imprégnée par le précurseur liquide de la phase de matrice consolidante. La préforme ainsi obtenue est maintenue en forme dans un outillage formant moule dans lequel la quantité voulue de précurseur liquide est injectée, par un processus semblable aux processus d'injection de résine de type RTM (« Resin Transfer Moulding ») bien connus.

Le précurseur liquide sous forme de résine est polymérisé, la texture fibreuse étant maintenue si nécessaire dans son outillage (étape 18). La polymérisation est réalisée à une température qui dépend de la résine utilisée, mais à laquelle un outillage métallique peut être utilisé.

La transformation du précurseur polymérisé en céramique (ou céramisation) est réalisée de façon classique par traitement thermique de la préforme imprégnée sans outillage (étape 20). Le traitement thermique est réalisé typiquement à une température de 800°C à 1500°C dans le cas d'un précurseur de SiC, selon la nature des fibres utilisées.

La densification de la préforme consolidée est ensuite poursuivie par CVI (étape 22). La matrice formée par CVI peut être de même nature que la phase consolidante ou de nature différente. On pourra notamment réaliser la phase finale de densification par une matrice de type Si-B-C ou une matrice auto-cicatrisante comprenant des phases alternées Si-B-C et B₄C comme décrit dans les documents US 5 246 736, US 5 965 266 et US 6 291 058.

On obtient ainsi une pièce en matériau CMC défragilisée dont la fabrication ne nécessite pas le dépôt d'un revêtement d'interphase ou d'une phase consolidante par un processus CVI avec maintien dans un outillage.

### Exemple 1

On a utilisé une texture fibreuse constituée par un tissu multicouches (30) de fils en fibres essentiellement en SiC fournis sous la référence « Hi-Nicalon » par la société japonaise Nippon Carbon, les fibres étant réunies par un filament de guipage en PVA (alcool polyvinylique). Un revêtement d'interphase BC/SiC (couche interne en BC et couche externe en SiC) a été formé sur les fibres par un processus CVI. L'épaisseur du revêtement d'interphase était d'environ 50 nm, les couches de BC et de SiC ayant sensiblement la même épaisseur. La microphotographie de la figure 2 montre le revêtement d'interphase formé sur une fibre SiC.

La texture fibreuse munie du revêtement d'interphase a été imprégnée par passage dans un bain contenant une résine polycarbosilazane, précurseur de SiC, en solution dans du xylène, puis essorage, de manière à laisser sur les fibres une quantité de résine représentant environ 40% en masse par rapport à la masse de la texture munie du revêtement d'interphase.

Une strate de texture fibreuse imprégnée a été maintenue en forme de plaque dans un outillage métallique lors de la polymérisation du précurseur réalisée à environ 200°C.

La transformation du précurseur polymérisé en SiC a été réalisée hors outillage par traitement thermique à une température d'environ 1000°C. Le SiC ainsi obtenu a réalisé une bonne consolidation de la préforme et représentait environ 12% en volume par rapport au volume apparent de préforme consolidée.

La préforme consolidée a ensuite été densifiée par une matrice de type Si-B-C par un processus CVI.

Une éprouvette du matériau CMC obtenu a été soumise à un essai en fatigue traction/traction à 500°C sous une contrainte de 80 MPa ± 20 MPa à une fréquence de 20 Hz. La rupture de l'éprouvette est intervenue au bout de 240 h, montrant une bonne résistance thermo-mécanique du matériau CMC.

## Revendications

1. Pièce en matériau composite à matrice céramique comportant un renfort fibreux densifié par une matrice céramique, avec un revêtement d'interphase formé sur les fibres du renfort, **caractérisée en ce que**
- le revêtement d'interphase a une épaisseur inférieure à 100 nm et comporte au moins une couche interne de défragilisation du matériau composite en carbone dopé au bore BC, au contact des fibres, et une couche externe d'adhérence avec la matrice céramique, et
- la matrice céramique comprend, au contact du revêtement d'interphase, une phase de matrice interne sous forme d'un produit de céramisation d'un précurseur du matériau céramique de la première phase de matrice, et au moins une phase de matrice externe sous forme d'un dépôt obtenu par infiltration chimique en phase vapeur.

2. Pièce selon la revendication 1, **caractérisée en ce que** les fibres du renfort fibreux sont en un matériau choisi parmi le carbone et les céramiques.

## Patentansprüche

1. Teil aus Keramikmatrix-Verbundwerkstoff, umfassend eine durch eine Keramikmatrix verdichtete Faserverstärkung, mit einer auf den Fasern der Verstärkung gebildeten Zwischenphasen-Beschichtung, **dadurch gekennzeichnet, dass**
- die Zwischenphasen-Beschichtung eine Dicke von weniger als 100 nm aufweist und wenigstens eine Innenschicht zum Entspröden des Verbundwerkstoffes aus mit Bor dotiertem Kohlenstoff BC, in Kontakt mit den Fasern, sowie eine Außenschicht zur Haftung mit der Keramikmatrix umfasst, und
- die Keramikmatrix in Kontakt mit der Zwischenphasen-Beschichtung eine innere Matrixphase in Form eines Produktes zum Keramisieren eines Vorläufers des Keramikmaterials der ersten Matrixphase sowie wenigstens eine äußere Matrixphase in Form einer durch chemische Gasphaseninfiltration erhaltenen Abscheidung umfasst.

2. Teil nach Anspruch 1, **dadurch gekennzeichnet, dass** die Fasern der Faserverstärkung aus einem Material bestehen, welches aus Kohlenstoff und Keramiken ausgewählt ist.

## Claims

1. A ceramic matrix composite material part comprising fiber reinforcement densified by a ceramic matrix, with an interphase coating formed on the reinforcing fibers, the part being **characterized in that**:
• the interphase coating has a thickness of less than 100 nm and comprises at least an inner layer in contact with the fibers for providing embrittlement relief to the boron-doped carbon BC composite material, and an outer layer for bonding with the ceramic matrix; and
• in contact with the interphase coating, the ceramic matrix comprises an inner matrix phase in the form of the product of ceramizing a precursor of the ceramic material of the first matrix phase, and at least one outer matrix phase in the form of a deposit obtained by chemical vapor infiltration.

2. A part according to claim 1, **characterized in that** the fibers of the fiber reinforcement are made of a material selected from carbon and ceramics.
